# FASCICULE DE BREVET EUROPEEN

(11) **EP 1 463 645 B1**
(45) Date de publication et mention de la délivrance du brevet: **02.12.2009**
(21) Numéro de dépôt: 02799124.9
(22) Date de dépôt: 27.12.2002
(51) Int. Cl.: B60J 5/04

(54) **CARROSSERIE DE VEHICULE AUTOMOBILE EQUIPEE DE MOYENS DE RETENUE POUR LIMITER L'INTRUSION DE PORTE A L'INTERIEUR DE L'HABITACLE LORS D'UN CHOC LATERAL**
FAHRZEUGKAROSSERIE MIT HALTEMITTELN ZUR BEGRENZUNG DER EINDRINGUNG DER TÜR IM FAHRZEUGINNENRAUM WÄHREND EINES SEITENAUFPRALLES
MOTOR VEHICLE BODY EQUIPPED WITH RETAINING MEANS FOR LIMITING DOOR INTRUSION INSIDE THE PASSENGER COMPARTMENT UPON LATERAL IMPACT

(30) Priorité: 04.01.2002 FR 0200092
(43) Date de publication de la demande: 06.10.2004
(73) Titulaire: Peugeot Citroën Automobiles, 92200 Neuilly Sur Seine (FR)
(72) Inventeur: CARRE, Laurent, F-78170 La Celle Saint Cloud (FR)
(74) Mandataire: De Cuenca, Emmanuel Jaime
(86) Numéro de dépôt international: PCT/FR2002/004574
(87) Numéro de publication internationale: WO 2003/059667

(56) Documents cités:
- US-A- 5 806 917
- US-B1- 6 247 744
- US-B1- 6 299 238
- PATENT ABSTRACTS OF JAPAN vol. 1998, no. 02, 30 janvier 1998 (1998-01-30) & JP 09 272387 A (NISSAN MOTOR CO LTD), 21 octobre 1997 (1997-10-21)

## Description

La présente invention concerne une carrosserie de véhicule automobile équipée de moyens de retenue pour limiter l'intrusion de porte à l'intérieur de l'habitacle lors d'un choc latéral subi par le véhicule.

La sécurité dite passive dans le domaine des véhicules automobiles fait l'objet de nombreux développements. En particulier, la protection des occupants des véhicules lors d'un choc latéral est une des préoccupations techniques majeures. Il faut pour cela limiter au maximum la déformation de la(des) porte(s) directement en contact avec l'être vivant ou l'objet lors du choc, et donc son intrusion dans l'habitacle du véhicule concerné. La rigidité propre de chacune des portes concernées, sa tenue latéral assurée par la serrure, les gâches, les charnières, les pieds avant et milieu du véhicule ainsi que les recouvrements de la porte sur le longeron et du longeron avec la partie extérieure en contact lors du choc contribuent fortement à limiter l'intrusion de la porte.

Les règles de conception et de fabrication classiques se trouvent néanmoins dépassées d'une part, pour certaines configurations de véhicule, telles que par exemple lorsque l'assiette du véhicule doit être basse ou les portes d'une grande longueur et d'autre part, lorsque la protection des occupants doit être absolument assurée. Dans ces cas là, il s'avère nécessaire de modifier la fabrication des systèmes d'ouvrants et de leur porte associée en ajoutant des moyens de retenue de la porte pour limiter son intrusion dans l'habitacle.

Plusieurs types de moyens de retenue ont déjà été proposés.

Le brevet US 5'806'917 divulgue un système de retenue d'une porte avant constitué de clefs de forme trapézoïdale disposées sur la doublure de porte et qui viennent s'insérer dans des logements de forme conjuguée disposés sur la carrosserie autour de l'encadrement de la porte. Ce système fournit différents points d'ancrage dans la périphérie de l'ouvrant mais ne dispose pas de point d'ancrage sur la ligne inférieure de porte. La tenue inférieure de la porte se fait par le biais d'une poutre qui vient prendre appui sur les parties latérales de l'entrée de porte et qui travaille donc en flexion et allongement combinés. Pour garantir l'efficacité de cette poutre, il est nécessaire d'utiliser des alliages résistants coûteux ou d'attribuer une masse importante à la poutre et ce au détriment des prestations de manoeuvre de la porte. D'autre part, l'implantation des logements implique de faire des concessions de style pour l'entrée de porte et, par conséquent, des contraintes supplémentaires sur la maîtrise de l'étanchéité des corps creux.

Un autre type de moyens de retenue consiste à délimiter la partie inférieure de la porte en une forme de L dont la branche horizontale vient se loger dans une saignée faite sur le côté de l'habitacle. Le L ainsi réalisé est recouvert d'un enjoliveur en caoutchouc qui vient en contact avec un autre enjoliveur fixé sur la caisse qui forme un couvert souple obstruant ainsi la saignée faite sur le côté de l'habitacle. Pour conserver une continuité dans le style du côté habitacle en dessous de la porte un enjoliveur en matériau plastique et de couleur identique à celle de la caisse du véhicule est fixé à celle-ci. Lors du choc latéral, le L vient prendre appui dans la saignée et travaille donc en flexion. La porte, ainsi pincée entre l'être vivant et/ou l'objet en contact avec le véhicule, est alors maintenue en partie basse afin d'éviter l'avalement de la ligne inférieure de la porte. L'efficacité de ce moyen de retenue dépend fortement de la tenue du L dans la gorge associée du côté de l'habitacle qui ne peut être améliorée que par l'effet de pincement de la doublure de porte sur le côté de l'habitacle. Les investissements et le prix de cette solution sont élevés. En effet, le nombre de pièces utilisé est important avec, pour certaines, telles que l'enjoliveur de bas de caisse en matériau plastique de couleur identique à celle de la caisse un prix unitaire élevé. De plus, le coût de la logistique associé est elevé et le temps de montage important. Un autre inconvénient de cette solution est que l'appui des deux joints inférieurs engendre un risque de bruit au roulage important. Enfin, le style est dégradé d'une part par la présence d'une ligne inférieure de découpe de porte nécessairement droite et anguleuse et d'autre part par celle d'un joint de fermeture de saignée de côté d'habitacle qui est large et d'aspect noir.

Un troisième type de moyens de retenue consiste en des pattes rigides qui font saillie de la doublure de porte en partie inférieure et qui sont fixées dans un corps creux par le biais d'un raidisseur. Ces pattes rigides viennent se loger dans des logements pratiqués sur le côté de l'habitacle et délimités par des pièces en caoutchouc qui servent également à assurer l'étanchéité. D'un point de vue fonctionnel, cette solution se rapproche de la solution précédemment décrite et son efficacité dépend de la tenue de la patte dans le trou associé du côté de l'habitacle. L'ensemble pattes-raidiseur travaille en flexion-torsion et sa tenue n'est améliorée uniquement par l'effet de pincement entre le côté habitacle et l'être vivant et/ou l'objet en contact lors du choc. Le dimensionnement nécessaire du raidisseur et des pattes engendre une dégradation de la masse de l'ouvrant. Les investissements de cette solution sont non négligeables et systématiques pour le raidisseur puisque sa reconduction telle quelle n'est pas possible dans le cas de longueur de portes différente. Le nombre de pièces est également élevé, ce qui augmente également le prix de cette solution. L'implantation des joints de logement des pattes sur le côté de l'habitacle implique également de faire des concessions de style sur l'entrée de porte et d'améliorer l'étanchéité des corps creux associés.

Le but de l'invention est alors d'éliminer tout ou partie des inconvénients des moyens de retenue précités et de proposer des moyens de retenue d'une porte de véhicule, automobile lors d'un choc latéral subi par celui-ci qui soient efficaces, de prix réduit et dont l'implantation ne dégrade pas le style du véhicule.

Pour ce faire, l'invention a pour objet une carrosserie de véhicule automobile comprenant au moins une ouverture de porte dont une partie comprend au moins un longeron recouvert d'une peau constituant le côté de l'habitacle, une porte montée pivotante autour de l'ouverture pour fermer ou découvrir cette ouverture et dont la doublure vient en contact au moins partiellement avec la peau en position fermée de la porte et des moyens de retenue de la porte pour limiter son intrusion à l'intérieur de l'habitacle lors d'un choc latéral subi par le véhicule, **caractérisée en ce que** les moyes de retenue de la porte comprennent au moins un pointeau fixé au longeron et un trou pratiqué dans la doublure de porte en regard du pointeau lorsque la porte est en position fermée.

Avantageusement, le pointeau est fixé, notamment par soudage ou vissage à l'âme du longeron.

Avantageusement encore, le trou est un trou bordé sur la doublure de porte.

Selon un mode de réalisation préféré de l'invention, les moyens de retenue de la porte comprennent deux pointeaux et deux trous chacun respectivement en regard d'un pointeau lorsque la porte est en position fermée et répartis à proximité du centre d'entrée de la porte.

Selon une variante de l'invention, le(s) pointeau(x) est(sont) fixé(s) sur un (des) contre(s) embouti(s) localement sur le(s) longeron(s).

Selon une autre variante de l'invention, le(s) pointeau(x) est(sont) fixé(s) sur une rainure continue pratiquée sur toute la longueur de l'âme du longeron.

Avantageusement encore, l'épaisseur de la partie de la peau en regard du pointeau est diminuée afin de faciliter la perforation de celle-ci lors du choc latéral subi par le véhicule.

Avantageusement encore, la porte comporte au moins une entretoise implantée entre la doublure et le panneau de porte et disposée au fond du trou pour éviter le déchirement de celui-ci lors du choc latéral par le pointeau.

De préférence, cette entretoise présente un profil interne complémentaire à celui du pointeau.

D'autres détails et caractéristiques avantageux apparaitront mieux à la lecture de la description détaillée d'un exemple de réalisation de l'invention faite en référence aux figures suivantes :
- figure 1 : une vue en coupe transversale d'une partie avant de carrosserie selon l'invention avant le choc latéral avec une barrière de choc ;
- figure 2 : une vue en coupe d'une partie avant de carrosserie selon l'invention après le choc latéral avec une barrière de choc;
- figure 3 :une vue agrandie d'une entrée de porte avant selon les figures 1 et 2.

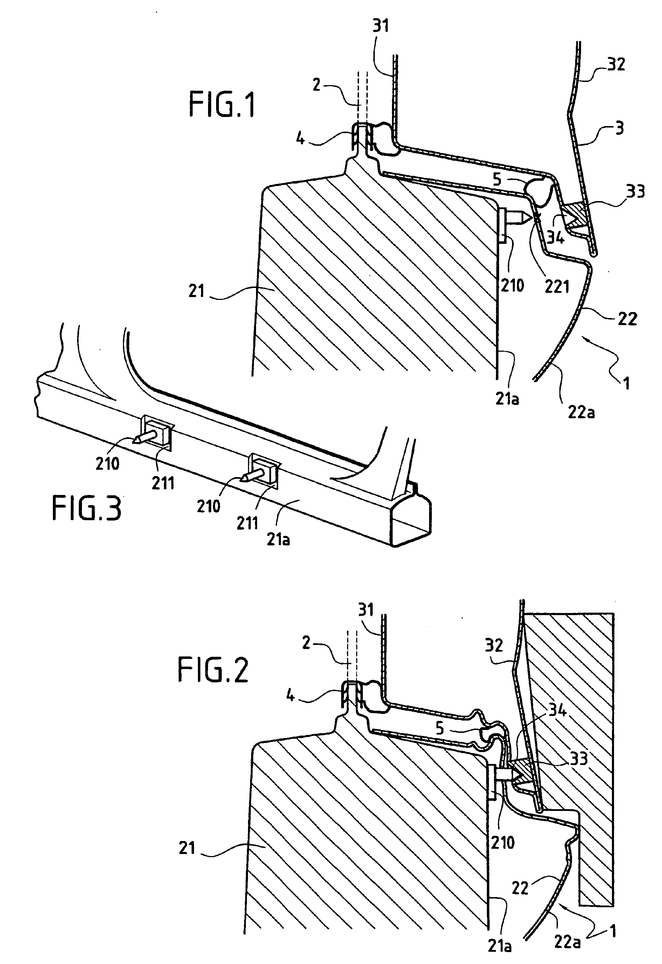

Sur la figure 1, on a représenté en coupe transversale une partie avant 1 d'une carrosserie d'un véhicule automobile selon l'invention, au niveau de l'entrée de porte avant.

Cette partie avant 1 de carrosserie comporte, de manière connue en soi, une ouverture de porte 2 dont la partie inférieure est un longeron 21.

Un pointeau 210 est soudé sur la face externe 21a de l'âme du longeron 21.

Une peau 22 constituant le côté de l'habitacle du véhicule est soudée à l'extérieur du longeron 21. La face interne 22a de cette peau 22 présente un marquage en croix 221 en regard du pointeau 210.

Cette partie avant 1 de carrosserie comporte également une porte avant 3 montée verticalement pivotante autour de l'ouverture de porte 2 au moyen de charnières connues et non représentées ici.

Cette porte avant 3 présente une doublure de porte 31 et un panneau extérieur 32 fixé à cette doublure 31 de manière connue en soi.A l'intérieur de cette porte 3 est logé une entretoise 33 en regard d'un trou bordé débouchant 34 pratiqué dans la doublure de porte 31. Cette entretoise 33 prséente un profil interne complémentaire à celui du pointeau 210.

L'étanchéité entre la partie inférieure de l'entrée de porte et la porte avant 3 est assurée par deux joints 4,5 fixés respectivement sur l'âme de longeron 21 et sur la doublure de porte 5.

La figure 2 représente une vue de la partie avant qui vient d'être décrite immédiatement après qu'elle est subie un choc avec une barrière de choc répondant aux normes de choc en vigueur.

Sur cette figure, on voit que le panneau extérieur 32 de la porte avant 3 est déformé et le pointeau 210 est logé dans l'entretoise 33. Celle-ci permet de ne pas laisser apparaitre le pointeau 210 à l'extérieur du véhicule après le choc et donc des parties agressives pour un être vivant.

Lors du choc latéral, la barrière vient comprimer, dans un premier temps, la doublure de porte 31 et la peau 22 constituant le côté d'habitacle sur le pointeau 210. L'épaisseur du côté d'habitacle étant plus faible que l'âme du longeron 21 et que la doublure de porte 31, le pointeau 210 transperce le côté d'habitacle pour venir se loger dans le trou bordé 34 de la doublure de porte 31.

La porte avant 3 est ainsi en quelque sorte crochetée sur le soubassement du véhicule et son effet de glissement par dessus le longeron 21 est stoppé. L'intrusion de la porte avant 3 dans l'habitacle est donc limitée.

La figure 3 est une vue agrandie de l'entrée de porte selon l'invention sur laquelle on voit que le pointeau 210 est fixé sur un contre embouti localement 211 de l'âme du longeron. Cette implantation est liée à la proximité de la face extérieure 21a de l'âme du longeron avec le volume de style formé par la peau 22a constituant le côté d'habitacle. Ce contre embouti localement ne perturbe absolument pas l'absortion énergétique du longeron en cas de choc frontal subi par le véhicule.

L'invention qui vient d'être décrite amène plusieurs avantages par rapport aux moyens de retenue existants :
- le maintien de la partie inférieure de porte se fait par un système encastré rigide. La retenue inférieure de la porte ne dépend pas des déformations de la porte qui travaille en allongement et non en flexion ou torsion;
- les moyens de retenue ne sont pas visibles de l'extérieur du véhicule et n'implique pas de dégradation de style ;
- le coût en investissements et en prix de revient est très réduit ;
- la masse de la porte n'est pas augmentée ;
- le dispositif d'étanchéité n'a pas à être modifié.

Bien entendu, il va de soi que des améliorations peuvent être apportées sans pour autant sortir du cadre de l'invention.

Ainsi, le nombre de pointeaux et trous associés peut être adapté en fonction de la longueur de la porte et des niveaux d'effort nécessaire pour la retenir.

De même, dans l'hypothèse où la perforation de la peau ne se fait pas suffisamment tôt lors du choc latéral, un affaiblissement de celle-ci peut être prévu tel que le marquage en croix précité qui, par diminution locale de l'épaisseur de tôle, favorise la perforation. D'autres solutions pour réduire localement l'épaisseur de tôle peuvent être envisagées. Par exemple, un contre-embouti en forme de cercle de faible diamètre et de faible profondeur avec un rayon d'emboutissage très faible peut être envisagé.

En outre, la dimension et la position relative du trou bordé sur la doublure de porte par rapport au pointeau peuvent être modifiées.

Enfin, si les efforts constatés lors d'un choc latéral risquent de déchirer la peau, le nombre de pointeaux peut être augmenté pour répartir les efforts et le retour de bord du trou peut être remplacé par une rondelle du type élingage.

## Revendications

1. Carrosserie (1) de véhicule automobile comprenant au moins une ouverture de porte (2) dont une partie comprend au moins un longeron (21) recouvert d'une peau constituant le côté de l'habitacle, une porte (3) montée pivotante autour de l'ouverture pour fermer ou découvrir cette ouverture et dont la doublure (31) vient en contact au moins partiellement avec la peau en position fermée de la porte (3) et des moyens de retenue de la porte pour limiter son intrusion à l'intérieur de l'habitacle lors d'un choc latéral subi par le véhicule, **caractérisée en ce que** les moyens de retenue (210,33,34) de la porte comprennent au moins un pointeau (210) fixé au longeron et un trou (34) pratiqué dans la doublure de porte en regard du pointeau lorsque la porte est en position fermée.

2. Carrosserie selon la revendication 1,
**caractérisée en ce que** le pointeau est fixé à l'âme du longeron.

3. Carrosserie selon la revendication 1 ou 2, **caractérisée en ce que** le trou est un trou bordé sur la doublure de porte.

4. Carrosserie selon l'une des revendications précédentes, **caractérisée en ce que** les moyens de retenue de la porte comprennent deux pointeaux et deux trous chacun respectivement en regard d'un pointeau lorsque la porte est en position fermée et répartis à proximité du centre d'entrée de la porte.

5. Carroserie selon l'une des revendications précédentes, **caractérisée en ce que** le(s) pointeau(x) est(sont) fixé(s) sur un (des) contre(s) embouti(s) localement sur le(s) longeron(s).

6. Carroserie selon l'une des revendications 1 à 4, **caractérisée en ce que** le(s) pointeau(x) est(sont) fixé(s) sur une rainure continue pratiquée sur toute la longueur de l'âme du longeron.

7. Carrosserie selon l'une des revendications précédentes, **caractérisée en ce que** l'épaisseur de la partie de la peau en regard du pointeau est diminuée afin de faciliter la perforation de celle-ci lors du choc latéral subi par le véhicule.

8. Carrosserie selon l'une des revendications précédentes, **caractérisée en ce que** la porte comporte au moins une entretoise (33) implantée entre la doublure et le panneau de porte et disposée au fond du trou pour éviter le déchirement de celui-ci par le pointeau lors du choc latéral.

9. Carrosserie selon la revendication 8,
**caractérisée en ce que** l'entretoise présente un profil interne complémentaire à celui du pointeau.

## Claims

1. Motor vehicle bodywork (1) comprising at least one door opening (2) of which part comprises at least one side rail (21) covered by a skin that constitutes the side of the passenger compartment, a door (3) pivot-mounted about the opening in order to close or uncover this opening and of which the lining (31) comes at least partially into contact with the skin when the door (3) is in the closed position, and door retaining means for limiting its intrusion into the passenger compartment if the vehicle is involved in a side impact, **characterized in that** the door retaining means (210, 33, 34) comprise at least one needle (210) fixed to the side rail and a hole (34) made in the door lining facing the needle when the door is in the closed position.

2. Bodywork according to Claim 1, **characterized in that** the needle is fixed to the web of the side rail.

3. Bodywork according to Claim 1 or 2, **characterized in that** the hole is an edged hole in the door lining.

4. Bodywork according to one of the preceding claims, **characterized in that** the door retaining means comprise two needles and two holes each respectively facing a needle when the door is in the closed position and distributed near to the middle of the door aperture.

5. Bodywork according to one of the preceding claims, **characterized in that** the needle(s) is(are) fixed to one (or more) counter(s) pressed locally into the side rail(s).

6. Bodywork according to one of Claims 1 to 4, **characterized in that** the needle(s) is(are) attached to a continuous groove made along the entire length of the web of the side rail.

7. Bodywork according to one of the preceding claims, **characterized in that** the thickness of the part of the skin facing the needle is reduced to make it easier for this skin to be punctured in the side impact to which the vehicle is subjected.

8. Bodywork according to one of the preceding claims, **characterized in that** the door comprises at least one spacer piece (33) fitted between the lining and the door panel and positioned in the bottom of the hole to prevent the latter from being torn by the needle in the side impact.

9. Bodywork according to Claim 8, **characterized in that** the spacer piece has an internal profile that complements that of the needle.

## Patentansprüche

1. Kraftfahrzeugkarosserie (1) mit mindestens einer Türöffnung (2), von der ein Teil mindestens einen von einer Haut überzogenen Längsträger (21) umfasst, der die Seite der Fahrgastzelle darstellt, einer Tür (3), die schwenkend um die Öffnung montiert ist, um diese Öffnung zu schließen oder freizulegen, und deren Verkleidung (31) in der geschlossenen Position der Tür (3) mindestens teilweise mit der Haut in Kontakt kommt, und mit Mitteln zum Halten der Tür, um bei einem auf das Fahrzeug einwirkenden Seitenaufprall ihr Eindringen in das Innere der Fahrgastzelle zu begrenzen, **dadurch gekennzeichnet, dass** die Mittel (210, 33, 34) zum Halten der Tür mindestens einen am Längsträger befestigten Stift (210) und ein Loch (34) umfassen, das in der Türverkleidung gegenüber dem Stift vorgesehen ist, wenn die Tür in der geschlossenen Position ist.

2. Karosserie nach Anspruch 1, **dadurch gekennzeichnet, dass** der Stift am Steg des Längsträgers befestigt ist.

3. Karosserie nach Anspruch 1 oder 2, **dadurch gekennzeichnet, dass** es sich bei dem Loch um eine eingefasstes Loch in der Türverkleidung handelt.

4. Karosserie nach einem der vorhergehenden Ansprüche, **dadurch gekennzeichnet, dass** die Mittel zum Halten der Tür zwei Stifte und zwei Löcher umfassen, die jeweils einem Stift gegenüberliegen, wenn die Tür in der geschlossenen Position ist, und in der Nähe der Eingangsmitte der Tür angeordnet sind.

5. Karosserie nach einem der vorhergehenden Ansprüche, **dadurch gekennzeichnet, dass** der(die) Stift(e) an (einem) örtlich an dem(den) Längsträger(n) tiefgezogenen Gegenstück(en) befestigt ist(sind).

6. Karosserie nach einem der Ansprüche 1 bis 4, **dadurch gekennzeichnet, dass** der(die) Stift(e) an einer durchgehenden Nut, die entlang der gesamten Länge des Stegs des Längsträgers ausgeführt ist, befestigt ist (sind) .

7. Karosserie nach einem der vorhergehenden Ansprüche, **dadurch gekennzeichnet, dass** die Dicke des Teils der Haut gegenüber dem Stift reduziert ist, damit diese bei einem auf das Fahrzeug einwirkenden Seitenaufprall leichter durchstoßen wird.

8. Karosserie nach einem der vorhergehenden Ansprüche, **dadurch gekennzeichnet, dass** die Tür mindestens ein Distanzstück (33) umfasst, das zwischen der Türverkleidung und der Türwand angebracht und auf dem Boden des Lochs angeordnet ist, damit Letzteres bei einem Seitenaufprall nicht vom Stift zerrissen wird.

9. Karosserie nach Anspruch 8, **dadurch gekennzeichnet, dass** das Innenprofil des Distanzstücks zu dem des Stifts komplementär ist.
